(19) Europäisches Patentamt

European Patent Office

Office européen des brevets

(11) Veröffentlichungsnummer: **0 452 833 B1**

(12) **EUROPÄISCHE PATENTSCHRIFT**

(45) Veröffentlichungstag der Patentschrift: **15.03.95**

(21) Anmeldenummer: **91105909.5**

(22) Anmeldetag: **13.04.91**

(51) Int. Cl.⁶: **F16H 3/66**

(54) **Mehrstufiges Fahrzeuggetriebe.**

(30) Priorität: **20.04.90 US 511697**

(43) Veröffentlichungstag der Anmeldung:
**23.10.91 Patentblatt 91/43**

(45) Bekanntmachung des Hinweises auf die
Patenterteilung:
**15.03.95 Patentblatt 95/11**

(84) Benannte Vertragsstaaten:
**DE FR GB IT**

(56) Entgegenhaltungen:
**EP-A- 0 036 656**
**US-A- 3 290 962**

(73) Patentinhaber: **DEERE & COMPANY**
**1 John Deere Road**
**Moline, Illinois 61265 (US)**

(72) Erfinder: **Jeffries, Dennis Lee**
**9842 Dysart Road**
**Waterloo,**
**Iowa 50704 (US)**
Erfinder: **Marquart, Gordon LeRoy**
**1174 Ainsworth Street**
**Jessup,**
**Iowa 50648 (US)**
Erfinder: **Mattson, Timothy John**
**5010 Dawnview Terrace**
**Golden Valley,**
**Minnesota 55422 (US)**

(74) Vertreter: **Feldmann, Bernhard et al**
**DEERE & COMPANY**
**European Office**
**Patent Department**
**D-68140 Mannheim (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung bezieht sich auf ein einen weiten Geschwindigkeitsbereich überdeckendes, mehrstufiges Lastschalt- und Wendegetriebe für Fahrzeuge, insbesondere auf ein Getriebe mit einer großen Anzahl von Geschwindigkeitsschaltstufen, wie sie beispielsweise bei industriellen oder landwirtschaftlichen Fahrzeugen wie Ackerschleppern und dergleichen, Verwendung finden, gemäß den Merkmalen des Oberbegriffs des Patentanspruchs 1 oder 2.

Durch die EP-B1-0 036 656 ist ein derartiges Getriebe bekannt geworden, welches einen weiten Geschwindigkeitsbereich abdeckt und theoretisch 27 Übersetzungsverhältnisse aufweist. Es hat sich jedoch gezeigt, daß einige der Übersetzungsverhältnisse sehr eng zusammenliegen und in der Praxis nicht alle 27 Gänge nutzbar sind. Es lassen sich jedoch nicht auf einfache Weise weitere Bremsen oder Kupplungen bei der Konstruktion gemäß der EP-B1-0 036 656 hinzufügen, da dies dazu führen würde, daß sich bei einigen Gangeinstellungen einige der Kupplungstrennscheiben und Bremsscheiben in entgegengesetzter Richtung bewegen würden. Eine derartige Konstruktion würde ein hohes Maß an Turbulenzen in dem Ölsystem verursachen und zu Störungen neigen.

Die mit der Erfindung zu lösende Aufgabe wird darin gesehen, ein mehrstufiges Fahrzeuggetriebe gemäß den Merkmalen des Oberbegriffs des Patentanspruchs 1 oder 2 anzugeben, das eine Vielzahl von Übersetzungsverhältnissen mit einer für die Praxis zweckmäßigen Gangeinteilung aufweist. Insbesondere sollen sich 19 Vorwärts- und 7 Rückwärtsgänge ergeben. Dabei soll das Getriebe nicht größer ausfallen, als beispielsweise ein Getriebe gemäß der EP-B1-0 036 656.

Die Aufgabe wird erfindungsgemäß durch die Merkmale des kennzeichnenden Teils des Patentanspruchs 1 oder 2 gelöst.

Hierdurch ergibt sich ein Fahrzeuggetriebe mit 19 Vorwärts- und 7 Rückwärtsgängen, welches ein Hauptplanetengetriebe mit drei auf einem Hauptplanetenträger gelagerten Planetenradsätzen und ein separates Lastschaltgetriebe enthält.

Wenigstens der erste und zweite Planetenradsatz umfassen Doppelzahnräder mit ersten und zweiten Verzahnungen. Jede der beiden Verzahnungen des ersten Planetenradsatzes stehen mit einem eigenen Zahnkranz, die unabhängig voneinander gegenüber dem Getriebegehäuse abbremsbar sind, sowie mit einem eigenen Sonnenrad in Eingriff. Ein Antrieb zu diesen beiden Sonnenrädern erfolgt von der Eingangswelle aus einerseits über einen direkten Antriebspfad oder über das Lastschaltplanetengetriebe (zweiter Antriebspfad). Die ersten Verzahnungen des zweiten Planetenradsatzes kämmen mit einem gegenüber dem Getriebegehäuse unabhängig abbremsbaren Zahnkranz und mit einem mit der Ausgangswelle verbundenen Sonnenrad. Die zweiten Verzahnungen des zweiten Planetenradsatzes kämmen lediglich mit Planetenrädern eines dritten Planetenradsatzes, die eine einfache Verzahnung haben. Die Planetenräder des dritten Planetenradsatzes kämmen mit einem eigenen Zahnkranz und einem eigenen Sonnenrad, die jeweils unabhängig gegenüber dem Getriebegehäuse abbremsbar sind.

Diese Konstruktion hat den Vorteil, daß sie die gewünschten 26 Übersetzungsverhältnisse liefert, wobei das Getriebe einen zum Getriebe gemäß der EP-B1-0 036 656 sehr ähnlichen Umriß aufweist.

Weitere vorteilhafte Ausgestaltungen und Weiterbildungen der Erfindung gehen aus den Unteransprüchen hervor.

Anhand der Zeichnung, die ein Ausführungsbeispiel der Erfindung zeigt, sollen die Erfindung sowie weitere Vorteile und vorteilhafte Weiterbildungen und Ausgestaltungen der Erfindung näher beschrieben und erläutert werden.

Es zeigt:

Fig. 1        die schematische Darstellung eines erfindungsgemäßen Getriebes,

Fig. 2a - 2d    zu einer Gesamtdarstellung zusammensetzbare Teildarstellungen des vergrößert dargestellten Getriebes gemäß Fig. 1, die im folgenden gemeinsam mit Fig. 2 bezeichnet werden und

Fig. 3        eine Schnittdarstellung entlang der Linie 3 - 3 in Fig. 1, durch die der Eingriff der verschiedenen Planetengetrieberäder, die auf dem Hauptplanetenradträger angeordnet sind, illustriert wird.

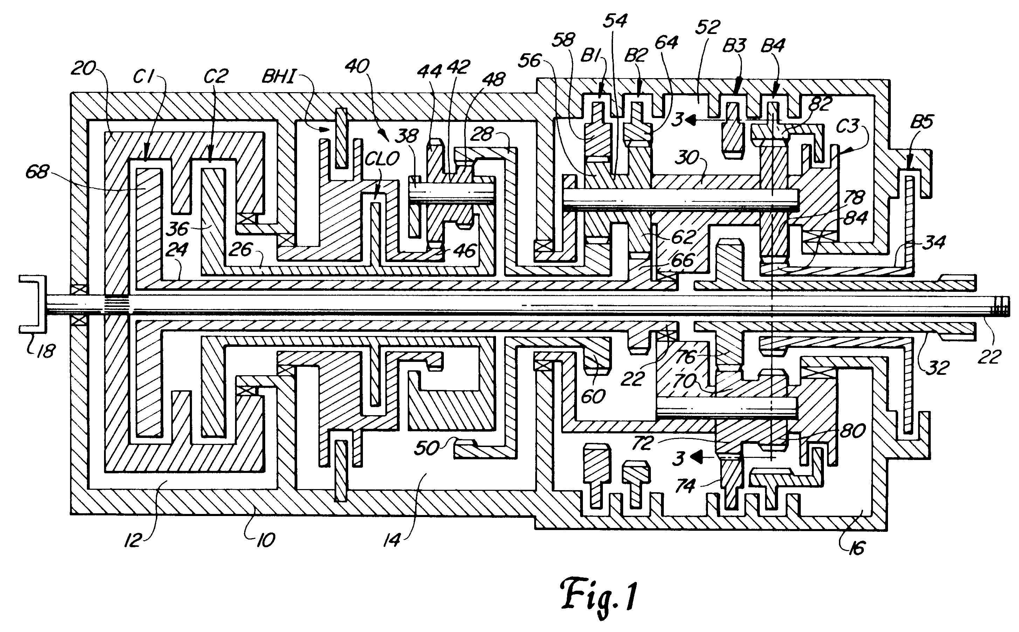

Das Getriebegehäuse 10 gemäß Fig. 1 enthält drei voneinander abgetrennte Abschnitte, und zwar eine Eingangskupplungskammer 12, eine Planetengetriebekammer 14 für ein Lastschaltgetriebe (Hi-Lo) und eine Hauptplanetengetriebekammer 16. Ausgehend von links und fortschreitend nach rechts in Fig. 1 befinden sich eine erste Kupplung C1 und eine Zweite Kupplung C2 in der Eingangskupplungskammer 12. Eine Hi-Lo-Bremse BHI und eine Hi-Lo-Kupplung CLO befinden sich in der Hi-Lo-Planetengetriebekammer 14. Eine erste Bremse B1, eine zweite Bremse B2, eine dritte Bremse B3, eine vierte Bremse B4 und eine dritte Kupplung C3 befinden sich in der Hauptplanetengetriebekammer 16. Die fünfte Bremse B5 ist außerhalb der Hauptplanetengetriebekammer 16 angeordnet, wird jedoch gemäß der Darstellung durch Komponenten angetrieben, die in der Hauptplanetengetriebekammer 16 liegen. Sie kann, falls gewünscht, auch innerhalb der Hauptplanetengetriebekammer 16 angeordnet werden.

Eine durch eine nicht dargestellte Antriebsmaschine angetriebene Eingangswelle 18 erstreckt sich gemäß Fig. 1 vom linken Ende des Gehäuses 10 in dieses hinein. Eine gemeinsame Kupplungstrommel 20 für die Kupplungen C1 und C2 ist drehfest auf der Eingangswelle 18 befestigt. Eine Verlängerung 22 der Eingangswelle 18 erstreckt sich durch das ganze Getriebe und tritt aus seiner gemäß Fig. 1 rechten Seite heraus, um eine direkte Leistungsübertragung, z. B. an einen Zapfwellenantrieb, zu ermöglichen.

Auf der Eingangswellenverlängerung 22 ist eine erste Zwischenwelle 24 drehbar angeordnet, die sich von der Eingangskupplungskammer 12 bis in die Hauptplanetengetriebekammer 16 erstreckt. Auf der ersten Zwischenwelle 24 ist eine zweite Zwischenwelle 26 drehbar angeordnet, die sich jedoch lediglich von der Eingangskupplungskammer 12 in die Hi-Lo-Planetengetriebekammer 14 erstreckt. Auf der ersten Zwischenwelle 24 ist ferner im Anschluß an das gemäß Fig. 1 rechte Ende der zweiten Zwischenwelle 26 eine Zwischentrommel 28 angeordnet, welche sich von der Hi-Lo-Planetengetriebekammer 14 in die Hauptplanetengetriebekammer 16 erstreckt. Schließlich ist der Hauptplanetenradträger 30 drehbar auf dem rechten Ende der ersten Zwischenwelle 24 in der Hauptplanetengetriebekammer 16 angeordnet.

Über der Eingangswellenverlängerung 22 ist rechts von der ersten Zwischenwelle 24 eine Ausgangswelle 32 drehbar angeordnet, welche sich von der Hauptplanetengetriebekammer 16 aus dem Gehäuse 10 heraus erstreckt. Eine Bremswelle 34 ist drehbar über der Ausgangswelle 32 angeordnet und erstreckt sich vom Inneren der Hauptplanetengetriebekammer 16 zur Bremse B5. Es versteht sich, daß obwohl die Welle 18 hier als Eingangswelle und die Welle 32 als Ausgangswelle bezeichnet sind, der Kraftfluß durch das Getriebe auch in umgekehrter Richtung erfolgen könnte. Diese Bezeichnungen wurden in der Beschreibung und den Ansprüchen lediglich zur Vereinfachung verwendet und sollen nicht den Schutzumfang der vorliegenden Erfindung beschränken.

Das linke Ende der zweiten Zwischenwelle 26 steht mit dem angetriebenen Teil der zweiten Kupplung C2 in Eingriff. Das entgegengesetzte Ende der zweiten Zwischenwelle 26 ist mit dem Planetenradträger 38 des Hi-Lo-Planetengetriebes 40 verbunden. Der Hi-Lo-Planetenträger 38 trägt mehrere drehbare Planetenräder 42, die jeweils zwei Verzahnungen 44, 48 aufweisen. Die linken Verzahnungen 44 kämmen mit dem Sonnenrad 46 des Hi-Lo-Planetengetriebes 40. Die Drehung des Sonnenrades 46 kann durch die Hi-Lo-Bremse BHI gegenüber dem Gehäuse 10 abgebremst oder durch die Kupplung CLO gegen eine Verdrehung mit der zweiten Zwischenwelle 26 und damit mit dem Hi-Lo-Planetenradträger 38 verkuppelt werden. Die rechten Verzahnungen 48 der Planetenräder 42 kämmen mit einem innenverzahnten Hi-Lo-Zahnkranz 50, der drehfest mit einem Ende der Zwischentrommel 28 befestigt ist.

Der Hauptplanetenradträger 30 des Hauptplanetengetriebes 52 trägt drei Sätze von drehbaren Planetenrädern. Der erste Planetenradsatz wird durch mehrere Planetenräder 54 mit jeweils zwei Verzahnungen 56, 62 gebildet. Die linken Verzahnungen 56 des ersten Planeteradsatzes 54 kämmen außen mit einem ersten innenverzahnten Zahnkranz 58, dessen Verdrehung relativ zum Gehäuse 10 durch die erste Bremse B1 abbremsbar ist. Die linken Verzahnungen 56 kämmen innen mit dem ersten Sonnenrad 60, welches drehfest mit der Zwischentrommel 28 verbunden ist, und zwar an deren zum Hi-Lo-Zahnkranz 50 entgegengesetztem Ende.

Die rechten Verzahnungen 62 des ersten Planetenradsatzes 54 kämmen außen mit einem zweiten innenverzahnten Zahnkranz 64, dessen Verdrehung relativ zum Gehäuse 10 durch die zweite Bremse B2 abbremsbar ist. Die rechten Verzahnungen 62 kämmen innen mit dem zweiten Sonnenrad 66, welches drehfest mit der ersten Zwischenwelle 24 verbunden ist. Das entgegengesetzte Ende 68 der ersten Zwischenwelle 24 ist mit dem angetriebenen Teil der ersten Kupplung C1 drehfest verbunden.

Der zweite Planetenradsatz wird ebenfalls durch mehrere Planetenräder 70 mit jeweils zwei Verzahnungen 72, 80 gebildet. Die linken Verzahnungen 72 kämmen außen mit einem dritten innenverzahnten Zahnkranz 74, dessen Verdrehung relativ zum Gehäuse 10 durch die dritte Bremse B3 abbremsbar ist. Die linken Verzahnungen 72 kämmen innen mit dem dritten Sonnenrad 76, welches drehfest mit der Ausgangswelle 32 verbunden ist.

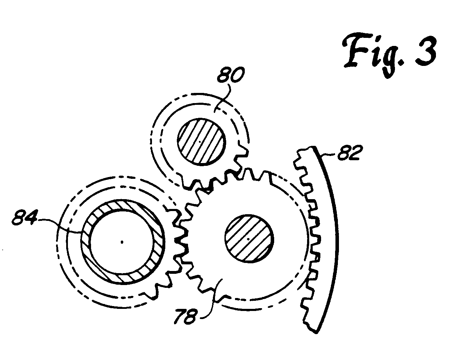

Der dritte Planetenradsatz wird durch mehrere Einzelzahnräder 78 gebildet, welche zwischen die Planetenräder 70 des zweiten Planetenradsatzes eingeschachtelt sind. Die rechten Verzahnungen 80 der Planetenräder 70 des zweiten Planetenradsatzes kämmen mit den Einzelzahnrädern 78 des dritten Planetenradsatzes, wie es aus Fig. 3 hervorgeht. Die Einzelzahnräder 78 kämmen außen mit einem vierten innenverzahnten Zahnkranz 82, dessen Verdrehung relativ zum Gehäuse 10 durch die vierte Bremse B4 abbremsbar oder gegen eine Verdrehung relativ zum Hauptplanetenradträger 30 mit diesem durch die dritte Kupplung C3 kuppelbar ist. Die Einzelzahnräder 78 des dritten Planetenradsatzes kämmen innen mit dem vierten Sonnenrad 84, welches drehfest auf der Bremswelle 34 befestigt ist und gegen Verdrehung relativ

3

zum Gehäuse 10 durch eine fünfte Bremse B5 abbremsbar ist.

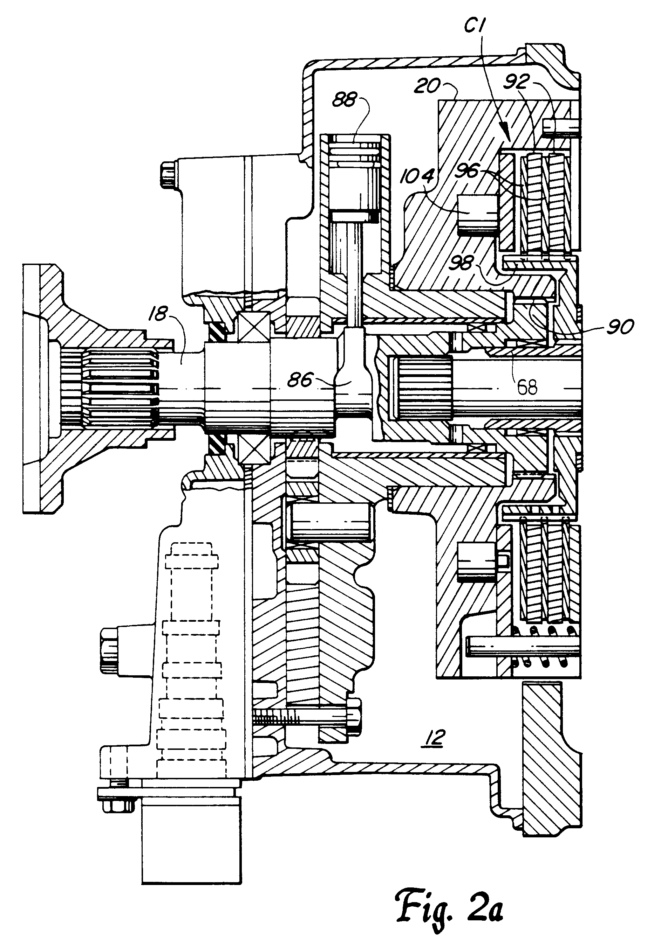

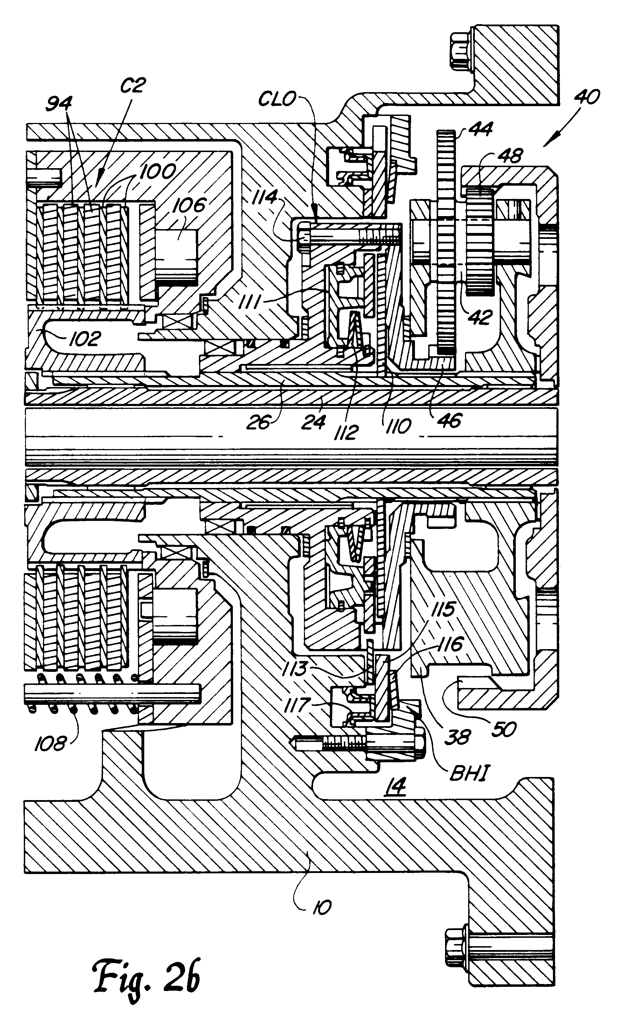

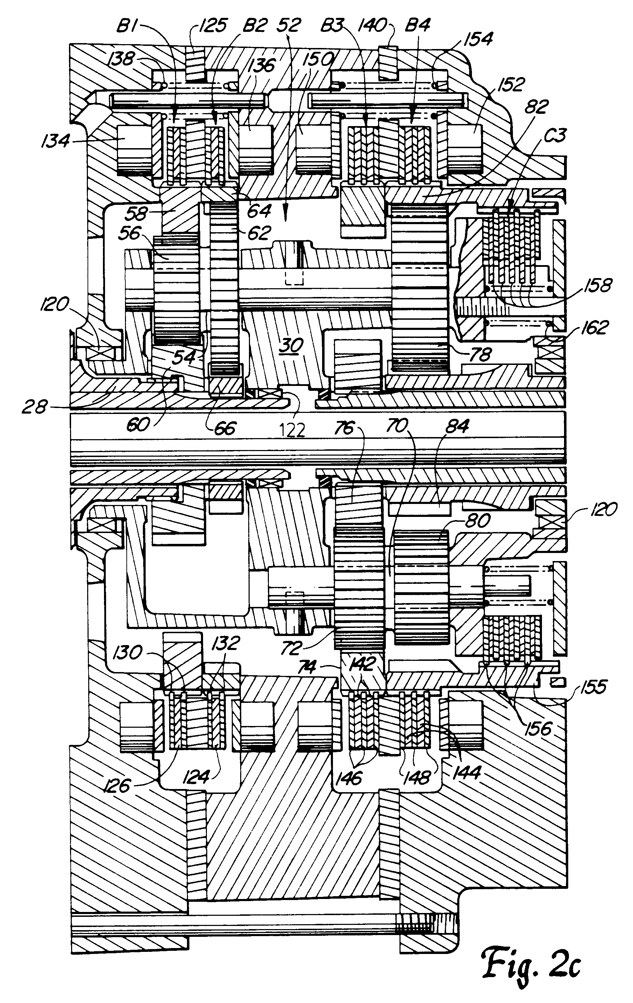

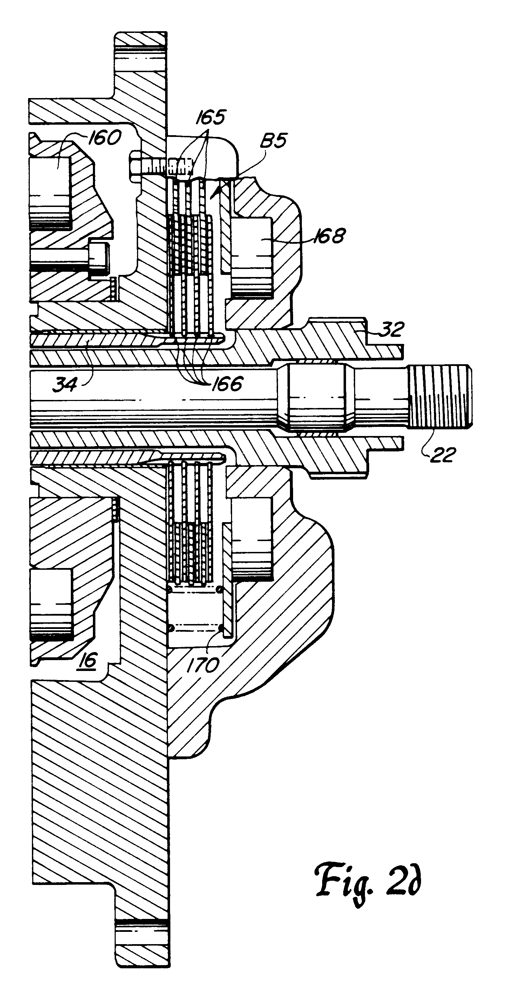

In Fig. 2 wurden die gleichen Bezugsziffern für sich entsprechende Teile wie in Fig. 1 verwendet. Die Eingangswelle 18 enthält eine Nockenoberfläche 86, welche eine Pumpe 88 antreibt. Durch die Pumpe 88 wird ein geeigneter Ölspiegel in den einzelnen Getriebekammern 12, 14, 16 des Getriebegehäuses 10 aufrechterhalten. Die Nockenoberfläche 86 und die Pumpe 88 sind Gegenstand der EP-A1-0 406 649, auf die hiermit zum Zwecke der Offenbarung Bezug genommen wird.

Das rechte Ende der Eingangswelle 18 ist über eine Keilverzahnung 90 mit der Kupplungstrommel 20 der ersten und zweiten Kupplung C1, C2 verbunden. Die Kupplungstrommel 20 ist ihrerseits mit Kupplungstrennscheiben 92 der ersten Kupplung C1 und Kupplungstrennscheiben 94 der zweiten Kupplung C2 verkeilt. Die Kupplungsscheiben 96 der ersten Kupplung C1 sind mit der Kupplungsnabe 98 der ersten Kupplung C1 verkeilt, und die Kupplungsscheiben 100 der zweiten Kupplung C2 sind mit der Nabe 102 der zweiten Kupplung C2 verkeilt. Die erste Kupplungsnabe 98 ist mit der ersten Zwischenwelle 24 und die zweite Kupplungsnabe 102 ist mit der zweiten Zwischenwelle 26 verkeilt. Die erste Kupplung C1 enthält einen Kolben 104, durch den zur Kupplungsbetätigung die Kupplungsscheiben 96 und Kupplungstrennscheiben 92 der ersten Kupplung C1 aufeinanderpreßbar sind. In gleicher Weise enthält die zweite Kupplung C2 einen Kolben 106, durch den zur Kupplungsbetätigung die Kupplungsscheiben 100 und Kupplungstrennscheiben 94 der zweiten Kupplung C2 zusammenpreßbar sind. Eine Feder 108 erstreckt sich zwischen den Druckplatten der Kolben 104, 106 und spannt die Kupplungen C1, C2 so vor, daß sie nicht in Eingriff stehen, sofern die Kolben 104, 106 nicht unter Druck gesetzt werden.

Die Kupplungskolben 104, 106 als auch die anderen weiter unten beschriebenen Kolben werden in üblicher Weise hydraulisch oder pneumatisch betätigt.

Der Planetenradträger 38 des Hi-Lo-Planetengetriebes 40 und die Kupplungsscheibe 110 der Hi-Lo-Kupplung CLO sind mit der zweiten Zwischenwelle 26 drehfest verkeilt. Ein Kupplungskolben 111 ist vorgesehen, um die Kupplung CLO in Eingriff zu bringen. Eine Feder 112 spannt den Kupplungskolben 111 so vor, daß die Kupplung CLO nicht eingreift. Eine Bremsscheibe 113 der Hi-Lo-Bremse BHI ist durch wenigstens eine Schraube 114 am Planetenradträger 38 fixiert und dreht sich mit dem Planetenradträger 38 mit. Durch eine Feder 116 wird eine Platte 115 gegen die Bremsscheibe 113 gedrückt, um die Bremse BHI in Eingriff zu bringen. Ein Bremskolben 117 ist vorgesehen, der die Platte 115 von der Bremsscheibe 113 wegdrückt und die Bremse BHI ausrückt.

Vorzugsweise werden der Hi-Lo-Kupplungskolben 111 und der Hi-Lo-Bremskolben 117 durch Umschalten einer einzigen Druckquelle von einen Kolben auf den anderen gesteuert. Auf diese Weise kann jeweils lediglich einer der beiden Kolben betätigt werden.

Der Hauptplanetenradträger 30 des Hauptplanetengetriebes 52 wird über die Lager 120 von dem Gehäuse 10 getragen. Das Lager 122 trägt die erste Zwischenwelle 24 und stellt deren richtige Lage hinsichtlich des Hauptplanetenradträgers 30 ein. Mehrere andere Lager sind innerhalb des Getriebes vorgesehen, werden hier jedoch nicht näher beschrieben.

Die erste Bremse B1 und die zweite Bremse B2 teilen sich eine gemeinsame große mittige Trennplatte 125, die am Gehäuse 10 befestigt ist. Eine zusätzliche Trennplatte 126 für die erste Bremse B1 und eine zusätzliche Trennplatte 124 für die zweite Bremse B2 sind zwischen den Bremsscheiben 130 der ersten Bremse B1 bzw. den Bremsscheiben 132 der zweiten Bremse B2 eingefügt. Die Bremsscheiben 130 sind mit dem ersten Zahnkranz 58 und die Bremsscheiben 132 sind mit dem zweiten Zahnkranz 64 verkeilt. Die erste Bremse B1 wird durch einen Kolben 134 und die zweite Bremse B2 wird durch einen weiteren Kolben 136 betätigt. Durch eine Feder 138 werden die beiden Bremsen B1, B2 geöffnet, so daß keine Bremswirkung eintritt.

Auf ähnliche Weise teilen sich auch die dritte Bremse B3 und die vierte Bremse B4 eine gemeinsame große, mittige Trennplatte 140, welche am Gehäuse 10 festgelegt ist. Auch hier sind zusätzliche Trennplatten 142 für die dritte Bremse B3 und zusätzliche Trennplatten 144 für die vierte Bremse B4 zwischen den Bremsscheiben 146 der dritten Bremse B3 bzw. den Bremsscheiben 146 der vierten Bremse B4 eingefügt. Die Bremsscheiben 146 sind mit dem dritten Zahnkranz 74 und die Bremsscheiben 148 sind mit dem vierten Zahnkranz 82 verkeilt. Die Kolben 150, 152 dienen der Betätigung der dritten bzw. vierten Bremse B3, B4. Durch eine Feder 154 werden die dritte und vierte Bremse B3, B4 geöffnet, so daß keine Bremswirkung eintritt.

Der vierte Zahnkranz 82 enthält ferner eine Verlängerung 155, mit der die Kupplungsscheiben 156 der dritten Kupplung C3 verkeilt sind. Die Trennscheiben 158 der dritten Kupplung C3 sind mit dem Hauptplanetenradträger 30 verkeilt. Durch einen Kolben 160 wird die dritte Kupplung C3 betätigt. Durch eine Feder 162 wird die dritte Kupplung C3 geöffnet.

Schließlich sind die Bremstrennscheiben 165 der fünften Bremse B5 mit dem Gehäuse 10 und die Bremsscheiben 166 mit der Bremswelle 34 drehfest verkeilt. Durch einen Kolben 168 wird die fünfte

4

Bremse B5 betätigt. Durch eine Feder 170 wird die fünfte Bremse B5 geöffnet, so daß keine Bremswirkung eintritt.

Es soll erwähnt werden, daß die Bremsen und Kupplungen zwar jeweils mit einer bestimmten Anzahl von Scheiben und Trennplatten dargestellt wurden, diese Anzahl kann jedoch beliebig auf die besonderen Anforderungen angepaßt werden.

Vorzugsweise hat jedes zuvor beschriebene Zahnrad die in Tabelle 1 angegebene Anzahl von Zähnen:

TABELLE I

| Beschreibung | Bezugszeichen | Zahl der Zähne |
|---|---|---|
| Linke Hi-Lo-Verzahnung | 44 | 42 |
| Sonnenrad | 46 | 33 |
| Rechte Hi-Lo-Verzahnung | 48 | 18 |
| Hi-Lo-Zahnkranz | 50 | 93 |
| Linke Verzahnung des 1. Planetenrades | 56 | 36 |
| Erster Zahnkranz | 58 | 16 |
| Erstes Sonnenrad | 60 | 69 |
| Rechte Verzahnung des 1. Planetenrades | 62 | 26 |
| Zweiter Zahnkranz | 64 | 72 |
| Zweites Sonnenrad | 66 | 21 |
| Linke Verzahnung des 2. Planetenrades | 72 | 17 |
| Dritter Zahnkranz | 74 | 63 |
| Drittes Sonnenrad | 76 | 30 |
| Verzahnung des 3. Planetenrades | 78 | 24 |
| Rechte Verzahnung des 2. Planetenrades | 80 | 15 |
| Vierter Zahnkranz | 82 | 69 |
| Viertes Sonnenrad | 84 | 21 |

**Betriebsweise**

Um Leistung durch das oben beschriebene Getriebe zu übertragen, werden entsprechend der Tabelle II verschiedene Bremsen und Kupplungen betätigt:

## T A B E L L E   I I

| Gang | C1 | C2 | CLO | BHI | B1 | B2 | B3 | B4 | C3 | B5 | Km/h | mp/h |
|------|----|----|-----|-----|----|----|----|----|----|----|------|------|
| N | | | | X | | | | | | | 0.00 | 0.00 |
| 1 | X | | X | | X | | | | X | | 1.65 | 1.02 |
| 2 | X | | X | | | X | | | X | | 2.37 | 1.47 |
| 3 | X | | X | | X | | | | | X | 2.97 | 1.84 |
| 4 | | X | X | | X | | | | X | | 3.59 | 2.23 |
| 5 | | X | | X | X | | | | X | | 4.14 | 2.57 |
| 6 | | X | X | | | X | | | X | | 4.70 | 2.92 |
| 7 | | X | | X | | X | | | X | | 5.41 | 3.36 |
| 8 | | X | X | | X | | | | | X | 6.44 | 4.00 |
| 9 | | X | | X | X | | | | | X | 7.43 | 4.61 |
| 10 | | X | X | | | X | | | | X | 8.43 | 5.24 |
| 11 | | X | | X | | X | | | | X | 9.71 | 6.03 |
| 12 | | X | X | | X | | X | | | | 11.14 | 6.92 |
| 13 | | X | | X | X | | X | | | | 12.84 | 7.97 |
| 14 | | X | X | | | X | X | | | | 14.57 | 9.05 |
| 15 | | X | | X | | X | X | | | | 16.78 | 10.42 |
| 16 | X | X | X | | | | | | | X | 18.80 | 11.67 |
| 17 | X | X | | X | | | | | | X | 23.26 | 14.44 |
| 18 | X | X | X | | | | X | | | | 32.49 | 20.18 |
| 19 | X | X | | X | | | X | | | | 40.20 | 24.96 |
| 1R | X | | X | | X | | | X | | | -2.66 | -1.65 |
| 2R | X | | X | | | X | | X | | | -3.80 | -2.36 |
| 3R | | X | X | | X | | | X | | | -5.77 | -3.58 |
| 4R | | X | | X | X | | | X | | | -6.65 | -4.13 |
| 5R | | X | X | | | X | | X | | | -7.55 | -4.69 |
| 6R | | X | | X | | X | | X | | | -8.70 | -5.40 |
| 7R | X | X | X | | | | | X | | | -16.84 | -10.46 |

Bei den in der Tabelle II angegebenen Endgeschwindigkeiten des Fahrzeuges ist vorausgesetzt, daß die Zahnräder des Getriebes die in Tabelle I angegebene Anzahl von Zähnen aufweisen und daß das Fahrzeug Räder mit einem dynamischen Index von 870 mm und einem unter Last stehenden Radius von 846 mm, eine Maschinendrehzahl von 2100 U/min und einen Reibungskoeffizienten von 0,9 enthält, wie sie beispielsweise bei einem typischen landwirtschaftlichen Breitspurschlepper gegeben sind.

Wenn auch andere Kombinationen von Kupplungs- und Bremseneinstellungen vorgenommen werden können, so ergeben diese entweder Enduntersetzungsverhältnisse, die sehr nahe bei denen in der Tabelle II angegebenen liegen, oder sie führen dazu, daß bestimmte zwischengeschaltete Scheiben oder Trennplatten in entgegengesetzte Richtungen bewegt werden, was sehr unerwünscht ist. Derartige andere Kombinationen können zu überhöhten Drehzahlen bei den Planetengetrieben als auch zu überhöhten Geschwindigkeiten des Fahrzeuges führen. Gemäß vorliegender Erfindung sind die oben angegebenen Untersetzungverhältnisse besonders bevorzugt.

Auch wenn die Erfindung lediglich an Hand eines Ausführungsbeispiels beschrieben wurde, erschließen sich für den Fachmann im Lichte der vorstehenden Beschreibung viele verschiedenartige Alternativen, Modifikationen und Varianten, die unter die vorliegende Erfindung fallen.

**Patentansprüche**

1. Fahrzeuggetriebe, insbesondere für ein industrielles oder landwirtschaftliches Fahrzeug, bestehend aus
   a) einem Getriebegehäuse (10),
   b) einer Eingangswelle (18), die sich in das Getriebegehäuse (10) erstreckt,
   c) einem im Getriebegehäuse (10) angeordneten Hauptplanetenradträger (30), der einen ersten, einen zweiten und einen dritten Planetenradsatz (54, 70, 78) trägt, wobei der erste Planetenradsatz (54) aus Doppelzahnrädern mit ersten und zweiten Verzahnungen (56, 62) besteht und die Planetenräder des zweiten Planetenradsatzes (70) mit den Planetenrädern des dritten Planetenradsatzes (78) kämmen,
   d) ersten und zweiten Kupplungsmitteln (C1, C2), durch die der Kraftfluß von der Eingangswelle (18) über einen ersten und einen zweiten Hauptantriebspfad zu dem Hauptplanetenträger (30) steuerbar ist,
   e) einem Lastschaltplanetengetriebe (40) in dem zweiten Hauptantriebspfad,
   f) einem ersten Zahnkranz (58) und einem ersten Sonnenrad (60), die mit den ersten Verzahnungen (56) des ersten Planetenradsatzes (54) kämmen, wobei die Krafteinspeisung zum ersten Sonnenrad (60) über den zweiten Hauptantriebspfad erfolgt,
   g) ersten Bremsmitteln (B1) zum wahlweisen Abbremsen der Drehbewegung des ersten Zahnkranzes (58) gegenüber dem Getriebegehäuse (10),
   h) einem zweiten Zahnkranz (64) und einem zweiten Sonnenrad (66), die mit den zweiten Verzahnungen (62) des ersten Planetenradsatzes (54) kämmen, wobei die Krafteinspeisung zum zweiten Sonnenrad (66) über den ersten Hauptantriebspfad erfolgt,
   i) zweiten Bremsmitteln (B2) zum wahlweisen Abbremsen der Drehbewegung des zweiten Zahnkranzes (64) gegenüber dem Getriebegehäuse (10),
   j) einem dritten Sonnenrad (76), das mit den Planetenrädern des zweiten Planetenradsatzes (70) kämmt,
   k) einem vierten Zahnkranz (82) und einem vierten Sonnenrad (84), die mit den Planetenrädern des dritten Planetenradsatzes (78) kämmen,
   l) vierten Bremsmitteln (B4) zum wahlweisen Abbremsen der Drehbewegung des vierten Zahnkranzes (82) gegenüber dem Getriebegehäuse (10),
   m) fünften Bremsmitteln (B5) zum wahlweisen Abbremsen der Drehbewegung des vierten Sonnenrades (84) gegenüber dem Getriebegehäuse (10),
   dadurch gekennzeichnet,
   n) daß wenigstens der zweite Planetenradsatz (70) aus Doppelzahnrädern mit ersten und zweiten Verzahnungen (72, 80) besteht, deren erste Verzahnungen (72) mit dem dritten Sonnenrad (76) und einem dritten Zahnkranz (74) kämmen und deren zweite Verzahnungen (80) mit Planetenrädern des dritten Planetenradsatzes (78) kämmen,
   o) daß dritte Bremsmittel (B3) zum wahlweisen Abbremsen der Drehbewegung des dritten Zahnkranzes (74) gegenüber dem Getriebegehäuse (10) vorgesehen sind,
   p) daß dritte Kupplungsmittel (C3) zur wahlweisen Kupplung der Drehbewegung des vierten Zahnkranzes (82) mit dem Hauptplanetenträger (30) vorgesehen sind und
   q) daß eine Ausgangswelle (32) rotationsfest mit dem vierten Sonnenrad (84) verbunden ist und aus dem Getriebegehäuse (10) herausragt.

2. Fahrzeuggetriebe, insbesondere für ein industrielles oder landwirtschaftliches Fahrzeug, bestehend aus
   a) einem Getriebegehäuse (10),
   b) einer Eingangswelle (18), die sich in das Getriebegehäuse (10) erstreckt,

c) einer ersten Zwischenwelle (24)

d) ersten Kupplungsmitteln (C1) zur wahlweisen Kupplung der Drehbewegung der Eingangswelle (18) mit der ersten Zwischenwelle (24),

e) einer zweiten hohlen Zwischenwelle (26), die drehbar um die erste Zwischenwelle (24) angeordnet ist,

f) zweiten Kupplungsmitteln (C2) zur wahlweisen Kupplung der Drehbewegung der Eingangswelle (18) mit der zweiten Zwischenwelle (26),

g) einer hohlen Zwischentrommel (28), die im Anschluß an die zweite Zwischenwelle (26) drehbar um die erste Zwischenwelle (24) angeordnet ist,

h) einer Ausgangswelle (32), die sich an die erste Zwischenwelle (24) anschließt,

i) einer hohlen Bremswelle (34), die drehbar um die Ausgangswelle (32) angeordnet ist,

j) einem Lastschaltplanetengetriebe (40), das um die zweite Zwischenwelle (26) angeordnet ist und dessen Eingang drehfest mit der zweiten Zwischenwelle (26) und dessen Ausgang drehfest mit der Zwischentrommel (28) verbindbar sind und

k) einem Hauptplanetengetriebe (52) mit

1) einem Hauptplanetenradträger (30), der drehbar um die erste Zwischenwelle (24), die Zwischentrommel (28), die Ausgangswelle (32) und die Bremswelle (34) angeordnet ist,

2) einem ersten Planetenradsatz (54), der aus Doppelzahnrädern mit ersten und zweiten Verzahnungen (56, 62) besteht, die jeweils drehbar auf dem Hauptplanetenradträger (30) gelagert sind,

3) einem ersten Sonnenrad (60), das drehfest auf der Zwischentrommel (28) angeordnet ist und mit den ersten Verzahnungen (56) des ersten Planetenradsatzes (54) kämmt,

4) einem ersten Zahnkranz (58), der mit den ersten Verzahnungen (56) des ersten Planetenradsatzes (54) kämmt,

5) ersten Bremsmitteln (B1) zum wahlweisen Abbremsen der Drehbewegung des ersten Zahnkranzes (58) gegenüber dem Getriebegehäuse (10),

6) einem zweiten Sonnenrad (66), das drehfest auf der ersten Zwischenwelle (24) angeordnet ist und mit den zweiten Verzahnungen (62) des ersten Planetenradsatzes kämmt,

7) einem zweiten Zahnkranz (64), der mit den zweiten Verzahnungen (62) des ersten Planetenradsatzes (54) kämmt,

8) zweiten Bremsmitteln (B2) zum wahlweisen Abbremsen der Drehbewegung des zweiten Zahnkranzes (64) gegenüber dem Getriebegehäuse (10),

9) einem zweiten Planetenradsatz (70), dessen Planetenräder drehbar auf dem Hauptplanetenradträger (30) gelagert sind,

10) einem dritten Sonnenrad (76), welches drehfest auf der Ausgangswelle (32) angeordnet ist und mit den Planetenrädern des zweiten Planetenradsatzes (70) kämmt,

11) einem dritten Planetenradsatz (78), dessen Planetenräder drehbar auf dem Hauptplanetenradträger (30) gelagert sind und mit den Planetenrädern des zweiten Planetenradsatzes (70) kämmen,

12) einem vierten Sonnenrad (84), welches drehfest auf der Bremswelle (34) angeordnet ist und mit den Planetenrädern des dritten Planetenradsatzes (78) kämmt,

13) einem vierten Zahnkranz (82), der mit den Planetenrädern des dritten Planetenradsatzes (78) kämmt,

14) vierten Bremsmitteln (B4) zum wahlweisen Abbremsen der Drehbewegung des vierten Zahnkranzes (82) gegenüber dem Getriebegehäuse (10),

15) fünften Bremsmitteln (B5) zum wahlweisen Abbremsen der Drehbewegung der Bremswelle (34) gegenüber dem Getriebegehäuse (10),

dadurch gekennzeichnet,

16) daß der zweite Planetenradsatz (70) des Hauptplanetengetriebes (52) aus Doppelzahnrädern mit ersten und zweiten Verzahnungen (72, 80) besteht, deren erste Verzahnungen (72) mit dem dritten Sonnenrad (76) und einem dritten Zahnkranz (74) kämmen und deren zweite Verzahnungen (80) mit Planetenrädern des dritten Planetenradsatzes (78) kämmen,

17) daß dritte Bremsmittel (B3) zum wahlweisen Abbremsen der Drehbewegung des dritten Zahnkranzes (74) gegenüber dem Getriebegehäuse (10) vorgesehen sind,

18) daß dritte Kupplungsmittel (C3) zur wahlweisen Kupplung der Drehbewegung des vierten Zahnkranzes (82) mit dem Hauptplanetenträger (30) vorgesehen sind,

l) daß die Eingangswelle (18) wahlweise eine Verlängerung (22) umfaßt und sich durch das ganze Getriebegehäuse (10) erstreckt und

m) daß die erste Zwischenwelle (24) und die Ausgangswelle (32) hohl ausgebildet und drehbar über der Eingangswelle (18, 22) angeordnet sind.

3. Fahrzeuggetriebe nach Anspruch 1 oder 2, dadurch gekennzeichnet, daß die ersten, zweiten, dritten, vierten und fünften Bremsmittel (B1, B2, B3, B4, B5) und die ersten, zweiten und dritten Kupplungsmittel (C1, C2, C3) in ausgerückter Richtung vorgespannt sind.

4. Fahrzeuggetriebe nach einem der Ansprüche 1 bis 3, dadurch gekennzeichnet, daß die ersten und zweiten Kupplungsmittel (C1, C2) sich eine gemeinsame Kupplungstrommel (20) teilen.

5. Fahrzeuggetriebe nach einem der Ansprüche 1 bis 4, dadurch gekennzeichnet, daß die ersten und zweiten Bremsmittel (B1, B2) sich eine gemeinsame Bremstrommel teilen.

6. Fahrzeuggetriebe nach einem der Ansprüche 1 bis 5, dadurch gekennzeichnet, daß die Planetenräder des dritten Planetenradsatzes (78) lediglich eine Einzelverzahnung aufweisen.

7. Fahrzeuggetriebe nach einem der Ansprüche 1 bis 6, gekennzeichnet durch ein Lastschaltplanetengetriebe (40) mit
a) einem Hi-Lo-Planetenradträger (38), auf dem drehbar die Planetenräder eines Hi-Lo-Planetenradsatzes (42) angeordnet sind und der drehfest mit einer angetriebenen Seite der zweiten Kupplung (C2) verbunden ist,
b) einem Hi-Lo-Zahnkranz (50), der mit den Planetenrädern des Hi-Lo-Planetenradsatzes (42) kämmt und mit dem ersten Sonnenrad (60) des Hauptplanetengetriebes (52) drehfest verbunden ist,
c) einem Hi-Lo-Sonnenrad (46), welches mit den Planetenrädern des Hi-Lo-Planetenradsatzes (42) kämmt,
d) Hi-Lo-Bremsmitteln (BHI) zum wahlweisen Abbremsen der Drehbewegung des Hi-Lo-Sonnenrades (46) gegenüber dem Getriebegehäuse (10) und
e) Hi-Lo-Kupplungsmitteln (CLO) zur wahlweisen Kupplung der Drehbewegung des Hi-Lo-Sonnenrades (46) mit dem Hi-Lo-Planetenradträger (38).

8. Fahrzeuggetriebe nach einem der Ansprüche 2 bis 7, gekennzeichnet durch ein Lastschaltplanetengetriebe (40) mit
a) einem Hi-Lo-Planetenradträger (38), der drehfest auf der Zweiten Zwischenwelle (26) angeordnet ist und als Eingangsteil dient,
b) einem Hi-Lo-Sonnenrad (46), das drehbar über der Zweiten Zwischenwelle (26) angeordnet ist,
c) einem Hi-Lo-Zahnkranz (50), der drehfest auf der Zwischentrommel (28) angeordnet ist und als Ausgangsteil dient,
d) einem Hi-Lo-Planetenradsatz (42), dessen Planetenräder drehbar auf dem Hi-Lo-Zahnkranz (50) angeordnet sind und mit dem Hi-Lo-Sonnerad (46) und dem Hi-Lo-Zahnkranz (50) kämmen,
e) Hi-Lo-Bremsmitteln (BHI) zum wahlweisen Abbremsen der Drehbewegung des Hi-Lo-Sonnenrades (46) gegenüber dem Getriebegehäuse (10) und
f) Hi-Lo-Kupplungsmitteln (CLO) zur wahlweisen Kupplung der Drehbewegung des Hi-Lo-Sonnenrades (46) mit dem Hi-Lo-Planetenradträger (38).

9. Fahrzeuggetriebe nach Anspruch 7 oder 8, dadurch gekennzeichnet, daß die Planetenräder des Hi-Lo-Planetenradsatzes (42) Doppelzahnräder mit ersten und zweiten Verzahnungen (44, 48) sind und das Hi-Lo-Sonnenrad (46) mit der ersten Verzahnung (44) und der Hi-Lo-Zahnkranz (50) mit der zweiten Verzahnung (48) kämmen.

10. Fahrzeuggetriebe nach einem der Ansprüche 7 bis 9, dadurch gekennzeichnet, daß die Hi-Lo-Bremse (BHI) in ausgerückter Richtung und die Hi-Lo-Kupplung (CLO) in eingerückter Richtung vorgespannt sind.

**Claims**

1. Vehicle gearbox, in particular for an industrial or agricultural vehicle, consisting of
a) a gearbox housing (10),
b) an input shaft (18) which extends into the gearbox housing (10),

EP 0 452 833 B1

c) a main planet wheel carrier (30) which is arranged in the gearbox housing (10) and which carries first, second and third planet wheel assemblies (54, 70, 78), wherein the first planet wheel assembly (54) consists of double gears with first and second teeth (56, 62) and the planet wheels of the second planet wheel assembly (70) mesh with the planet wheels of the third planet wheel assembly (78),

d) first and second clutch means (C1, C2) by which the power flux from the input shaft (18) via first and second main drive paths to the main planet carrier (30) is controllable,

e) a change-under-load planetary gear mechanism (40) in the second main drive path,

f) a first ring gear (58) and a first sun wheel (60) which mesh with the first teeth (56) of the first planet wheel assembly (54), wherein the power supply to the first sun wheel (60) takes place via the second main drive path,

g) first braking means (B1) for selectively braking the rotary movement of the first ring gear (58) relative to the gearbox housing (10),

h) a second ring gear (64) and a second sun wheel (66) which mesh with the second teeth (62) of the first planet wheel assembly (54), wherein the power supply to the second sun wheel (66) takes place via the first main drive path,

i) second braking means (B2) for selectively braking the rotary movement of the second ring gear (64) relative to the gearbox housing (10),

j) a third sun wheel (76) which meshes with the planet wheels of the second planet wheel assembly (70),

k) a fourth ring gear (82) and a fourth sun wheel (84) which mesh with the planet wheels of the third planet wheel assembly (78),

l) fourth braking means (B4) for selectively braking the rotary movement of the fourth ring gear (82) relative to the gearbox housing (10),

m) fifth braking means (B5) for selectively braking the rotary movement of the fourth sun wheel (84) relative to the gearbox housing (10),

characterised

n) in that at least the second planet wheel assembly (70) consists of double gears with first and second teeth (72, 80) of which the first teeth (72) mesh with the third sun wheel (76) and a third ring gear (74) and of which the second teeth (80) mesh with planet wheels of the third planet wheel assembly (78),

o) in that third braking means (B3) are provided for selectively braking the rotary movement of the third ring gear (74) relative to the gearbox housing (10),

p) in that third clutch means (C3) are provided for selectively coupling the rotary movement of the fourth ring gear (82) to the main planet carrier (30) and

q) in that an output shaft (32) is connected non-rotatably to the fourth sun wheel (84) and protrudes from the gearbox housing (10).

2. Vehicle gearbox, in particular for an industrial or agricultural vehicle, consisting of

a) a gearbox housing (10),

b) an input shaft (18) which extends into the gearbox housing (10),

c) a first countershaft (24),

d) first clutch means (C1) for selectively coupling the rotary movement of the input shaft (18) to the first countershaft (24),

e) a second hollow countershaft (26) which is arranged so as to be rotatable about the first countershaft (24),

f) second clutch means (C2) for selectively coupling the rotary movement of the input shaft (18) to the second countershaft (26),

g) a hollow intermediate drum (28) which is arranged adjoining the second countershaft (26) so as to be rotatable about the first countershaft (24),

h) an output shaft (32) which adjoins the first countershaft (24),

i) a hollow brake shaft (34) which is arranged so as to be rotatable about the output shaft (32),

j) a change-under-load planetary gear mechanism (40) which is arranged about the second countershaft (26) and of which the input can be connected non-rotatably to the second countershaft (26) and of which the output can be connected non-rotatably to the intermediate drum (28) and

k) a main planetary gear mechanism (52) with

1) a main planet wheel carrier (30) which is arranged so as to be rotatable about the first countershaft (24), the intermediate drum (28), the output shaft (32) and the brake shaft (34),

2) a first planet wheel assembly (54) which consists of double gears with first and second teeth (56, 62) which are in each case mounted rotatably on the main planet wheel carrier (30),

3) a first sun wheel (60) which is arranged non-rotatably on the intermediate drum (28) and meshes with the first teeth (56) of the first planet wheel assembly (54),

4) a first ring gear (58) which meshes with the first teeth (56) of the first planet wheel assembly (54),

5) first braking means (B1) for selectively braking the rotary movement of the first ring gear (58) relative to the gearbox housing (10),

6) a second sun wheel (66) which is arranged non-rotatably on the first intermediate shaft (24) and meshes with the second teeth (62) of the first planet wheel assembly,

7) a second ring gear (64) which meshes with the second teeth (62) of the first planet wheel assembly (54),

8) second braking means (B2) for selectively braking the rotary movement of the second ring gear (64) relative to the gearbox housing (10),

9) a second planet wheel assembly (70) of which the planet wheels are mounted rotatably on the main planet wheel carrier (30),

10) a third sun wheel (76) which is arranged non-rotatably on the output shaft (32) and meshes with the planet wheels of the second planet wheel assembly (70),

11) a third planet wheel assembly (78) of which the planet wheels are mounted rotatably on the main planet wheel carrier (30) and mesh with the planet wheels of the second planet wheel assembly (70),

12) a fourth sun wheel (84) which is arranged non-rotatably on the brake shaft (34) and meshes with the planet wheels of the third planet wheel assembly (78),

13) a fourth ring gear (82) which meshes with the planet wheels of the third planet wheel assembly (78),

14) fourth braking means (B4) for selectively braking the rotary movement of the fourth ring gear (82) relative to the gearbox housing (10),

15) fifth braking means (B5) for selectively braking the rotary movement of the brake shaft (34) relative to the gearbox housing (10),

characterised

16) in that the second planet wheel assembly (70) of the main planetary gear mechanism (52) consists of double gears with first and second teeth (72, 80) of which the first teeth (72) mesh with the third sun wheel (76) and a third ring gear (74) and of which the second teeth (80) mesh with planet wheels of the third planet wheel assembly (78),

17) in that third braking means (B3) are provided for selectively braking the rotary movement of the third ring gear (74) relative to the gearbox housing (10),

18) in that third clutch means (C3) are provided for selectively coupling the rotary movement of the fourth ring gear (82) to the main planet carrier (30),

l) in that the input shaft (18) selectively includes an extension (22) and extends through the whole gearbox housing (10) and

m) in that the first countershaft (24) and the output shaft (32) are of hollow construction and arranged rotatably over the input shaft (18, 22).

3. Vehicle gearbox according to claim 1 or 2, characterised in that the first, second, third, fourth and fifth braking means (B1, B2, B3, B4, B5) and the first, second and third clutch means (C1, C2, C3) are biased in the released direction.

4. Vehicle gearbox according to any of claims 1 to 3, characterised in that the first and second clutch means (C1, C2) share a common clutch drum (20).

5. Vehicle gearbox according to any of claims 1 to 4, characterised in that the first and second braking means (B1, B2) share a common brake drum.

6. Vehicle gearbox according to any of claims 1 to 5, characterised in that the planet wheels of the third planet wheel assembly (78) comprise only single teeth.

7. Vehicle gearbox according to any of claims 1 to 6, characterised by a change-under-load planetary gear mechanism (40) with

EP 0 452 833 B1

a) a hi-lo planet wheel carrier (38) on which the planet wheels of a hi-lo planet wheel assembly (42) are arranged rotatably and which is non-rotatably connected to a driven side of the second clutch (C2),

b) a hi-lo ring gear (50) which meshes with the planet wheels of the hi-lo planet wheel assembly (42) and is non-rotatably connected to the first sun wheel (60) of the main planetary gear mechanism (52),

c) a hi-lo sun wheel (46) which meshes with the planet wheels of the hi-lo planet wheel assembly (42),

d) hi-lo braking means (BHI) for selectively braking the rotary movement of the hi-lo sun wheel (46) relative to the gearbox housing (10) and

e) hi-lo clutch means (CLO) for selectively coupling the rotary movement of the hi-lo sun wheel (46) to the hi-lo planet wheel carrier (38).

8. Vehicle gearbox according to any of claims 2 to 7, characterised by a change-under-load planetary gear mechanism (40) with

a) a hi-lo planet wheel carrier (38) which is arranged non-rotatably on the second countershaft (26) and serves as an input component,

b) a hi-lo sun wheel (46) which is arranged rotatably over the second countershaft (26),

c) a hi-lo ring gear (50) which is arranged non-rotatably on the intermediate drum (28) and serves as an output component,

d) a hi-lo planet wheel assembly (42) of which the planet wheels are arranged rotatably on the hi-lo ring gear (50) and mesh with the hi-lo sun wheel (46) and the hi-lo ring gear (50),

e) hi-lo braking means (BHI) for selectively braking the rotary movement of the hi-lo sun wheel (46) relative to the gearbox housing (10) and

f) hi-lo clutch means (CLO) for selectively coupling the rotary movement of the hi-lo sun wheel (46) to the hi-lo planet wheel carrier (38).

9. Vehicle gearbox according to claim 7 or 8, characterised in that the planet wheels of the hi-lo planet wheel assembly (42) are double gears with first and second teeth (44, 48) and the hi-lo sun wheel (46) meshes with the first teeth (44) and the hi-lo ring gear (50) meshes with the second teeth (48).

10. Vehicle gearbox according to any of claims 7 to 9, characterised in that the hi-lo brake (BHI) is biased in the released direction and the hi-lo clutch (CLO) is biased in the engaged direction.

**Revendications**

1. Boîte de vitesses de véhicule automobile, notamment pour un véhicule industriel ou agricole, constitué par

a) un carter (10),

b) un arbre d'entrée (18), qui s'étend dans le carter (10) de la boîte de vitesses,

c) un support principal (30) de roues satellites, qui est disposé dans le carter (10) de la boîte de vitesses et qui porte des premier, second et troisième ensembles (54, 70, 78) de pignons satellites, le premier ensemble de pignons satellites (54) étant constitué de pignons doubles comportant des première et seconde dentures (56, 62), et les pignons satellites du second ensemble de pignons satellites (70) engrenant avec les pignons satellites du troisième ensemble de pignons satellites (78),

d) des premiers et seconds moyens d'accouplement (C1, C2), à l'aide desquels peut être commandé le flux de force qui part de l'arbre d'entrée (18) pour aboutir au support (30) des pignons satellites, par l'intermédiaire de premier et second trajets d'entraînement principal,

e) un engrenage satellite commandé en charge (40) dans le second trajet d'entraînement principal,

f) une première couronne dentée (58) et une première roue planétaire (60), qui engrènent avec les premières dentures (56) du premier ensemble de pignons satellites (54), l'application d'une force à la première roue planétaire (60) s'effectuant par l'intermédiaire du second trajet d'entraînement principal,

g) des premiers moyens de freinage (B1) pour freiner au choix le mouvement de rotation de la première couronne dentée (58) par rapport au carter (10) de la boîte de vitesses,

h) une seconde couronne dentée (64) et une seconde roue planétaire (66), qui engrènent avec les secondes dentures (62) du premier ensemble de pignons satellites (54), l'application d'une force à la seconde roue planétaire (66) s'effectuant par l'intermédiaire du premier trajet d'entraînement

12

principal,

i) des seconds moyens de freinage (B2) pour freiner au choix le mouvement de rotation de la seconde couronne dentée (64) par rapport au carter (10) de la boîte de vitesses,

j) une troisième roue planétaire (76), qui engrène avec les pignons satellites du second ensemble de pignons satellites (70),

k) une quatrième couronne dentée (82) et une quatrième roue planétaire (84), qui engrènent avec des pignons satellites du troisième ensemble de pignons satellites (78),

l) des quatrièmes moyens de freinage (B4) pour freiner au choix le mouvement de rotation de la quatrième couronne dentée (82) par rapport au carter (10) de la boîte de vitesses,

m) des cinquièmes moyens de freinage (B5) pour freiner au choix le mouvement de rotation de la quatrième roue planétaire (84) par rapport au carter (10) de la boîte de vitesses,

caractérisée par le fait

n) qu'au moins le second ensemble de pignons satellites (70) est constitué par des pignons doubles possédant des première et seconde dentures (72,80), dont les premières dentures (72) engrènent avec la troisième roue planétaire (76) et une troisième couronne dentée (74) et dont les secondes dentures (80) engrènent avec des pignons satellites du troisième ensemble de pignons satellites (78),

o) que des troisièmes moyens de freinage (C3) sont prévus pour le freinage au choix du mouvement de rotation de la troisième couronne dentée (74) par rapport au carter (10) de la boîte de vitesses,

p) que des troisièmes moyens d'embrayage (C3) sont prévus pour réaliser l'embrayage au choix du mouvement de rotation de la quatrième couronne dentée (82) au support principal (30) des pignons satellites, et

q) qu'un arbre de sortie (32) est relié avec blocage en rotation à la quatrième roue planétaire (84) et fait saillie hors du carter (10) de la boîte de vitesses.

2. Boîte de vitesses pour véhicule, notamment pour un véhicule industriel ou agricole, constituée par

a) un carter (10),

b) un arbre d'entrée (18), qui s'étend dans le carter (10) de la boîte de vitesses,

c) un premier arbre intermédiaire (24),

d) des premiers moyens d'embrayage (C1) pour l'embrayage au choix du mouvement de rotation de l'arbre d'entrée (18) au premier arbre intermédiaire (24),

e) un second arbre intermédiaire creux (26), qui est disposé de manière à pouvoir tourner autour du premier arbre intermédiaire (24),

f) des seconds moyens d'embrayage (C2) pour réaliser l'embrayage au choix du mouvement de rotation de l'arbre d'entrée (18) au second arbre intermédiaire (26),

g) un tambour intermédiaire creux (28), qui est disposé à la suite du second arbre intermédiaire (26) de manière à pouvoir tourner autour du premier arbre intermédiaire (24),

h) un arbre de sortie (32), qui est raccordé au premier arbre intermédiaire (24),

i) un arbre creux de freinage (24), qui est monté de manière à pouvoir tourner autour de l'arbre de sortie (32),

j) un engrenage satellite (40) commandé en charge, qui est disposé autour du second arbre intermédiaire (26) et dont l'entrée peut être reliée avec blocage en rotation au second arbre intermédiaire (26) et dont la sortie peut être reliée avec blocage en rotation au tambour intermédiaire (28), et

k) un engrenage satellite principal (52), comportant

1) un support principal (30) de pignons satellites, qui est monté de manière à pouvoir tourner autour du premier arbre intermédiaire (24), du tambour intermédiaire (28), de l'arbre de sortie (32) et de l'arbre de freinage (34),

2) un premier ensemble de pignons satellites (54), qui est constitué par des pignons doubles comportant des première et seconde dentures (56,62) et qui sont montés respectivement de manière à pouvoir tourner sur le support principal (30) des pignons satellites,

3) une première roue planétaire (60), qui est montée avec blocage en rotation sur le tambour intermédiaire (28) et engrène avec les premières dentures (56) du premier ensemble de pignons satellites (54),

4) une première couronne dentée (58), qui engrène avec les premières dentures (56) du premier ensemble de pignons satellites (54),

5) des premiers moyens de freinage (B1) pour freiner au choix le mouvement de rotation de la première couronne dentée (58) par rapport au carter (10) de la boîte de vitesses,

6) une seconde roue planétaire (66), qui est montée avec blocage en rotation sur le premier arbre intermédiaire (24) et engrène avec les secondes dentures (62) du premier ensemble de pignons satellites,

7) une seconde couronne dentée (64) qui engrène avec les secondes dentures (62) du premier ensemble de pignons satellites (54),

8) des seconds moyens de freinage (B2) pour freiner au choix le mouvement de rotation de la seconde couronne dentée (64) par rapport au carter (10) de la boîte de vitesses,

9) un second ensemble de pignons satellites (70), dont les pignons satellites sont montés de manière à pouvoir tourner sur le support principal (30) des pignons satellites,

10) une troisième roue planétaire (76), qui est montée avec blocage en rotation sur l'arbre de sortie (32) et engrène avec les pignons satellites du second ensemble de pignons satellites (70),

11) un troisième ensemble de pignons satellites (78), dont les pignons satellites sont montés de manière à pouvoir tourner sur le support principal (30) des pignons satellites et engrènent avec les pignons satellites du second ensemble de pignons satellites (70),

12) une quatrième roue planétaire (84), qui est montée avec blocage en rotation sur l'arbre de freinage (34) et engrène avec les pignons satellites du troisième ensemble de pignons satellites (78),

13) une quatrième couronne dentée (82), qui engrène avec les pignons satellites du troisième ensemble de pignons satellites (78),

14) des quatrièmes moyens de freinage (B4) pour freiner au choix le mouvement de rotation de la quatrième couronne dentée (82) par rapport au carter (10) de la boîte de vitesses,

15) des cinquièmes moyens de freinage (B5) pour freiner au choix le mouvement de rotation de l'arbre de freinage (34) par rapport au carter (10) de la boîte de vitesses,

caractérisée en ce

16) que le second ensemble de pignons satellites (70) de l'engrenage satellite principal (52) est constitué par des pignons doubles comportant des première et seconde dentures (72,80), dont les premières dentures (72) engrènent avec la troisième roue planétaire (76) et avec une troisième couronne dentée (74) et dont les secondes dentures (80) engrènent avec des pignons satellites du troisième ensemble de pignons satellites (78),

17) que des troisièmes moyens de freinage (B3) sont prévus pour freiner au choix le mouvement de rotation de la troisième couronne dentée (74) par rapport au carter (10) de la boîte de vitesses,

18) que des troisièmes moyens de couplage (C3) sont prévus pour l'embrayage au choix du mouvement de rotation de la quatrième couronne dentée (82) au support principal (30) des pignons satellites,

l) que l'arbre d'entrée (18) comprend au choix un prolongement (22) et s'étend à travers l'ensemble du carter (10) de la boîte de vitesses, et

m) que le premier arbre intermédiaire (24) et l'arbre de sortie (32) sont creux et sont montés de manière à pouvoir tourner autour de l'arbre d'entrée (18,22).

3. Boîte de vitesses pour véhicule selon la revendication 1 ou 2, caractérisée en ce que les premiers, seconds, troisièmes, quatrièmes et cinquièmes moyens de freinage (B1,B2,B3,B4,B5) et les premiers, seconds et troisièmes moyens d'embrayage (C1,C2,C3) sont précontraints dans la direction de l'état débrayé.

4. Boîte de vitesses pour véhicule selon l'une des revendications 1 à 3, caractérisée en ce que les premiers et seconds moyens d'embrayage (C1,C2) se partagent un tambour d'embrayage commun (20).

5. Boîte de vitesses pour véhicule selon l'une des revendications 1 à 4, caractérisée par le fait que les premiers et seconds moyens de freinage (B1,B2) se partagent un tambour de frein commun.

6. Boîte de vitesses pour véhicule selon l'une des revendications 1 à 5, caractérisée en ce que les pignons satellites du troisième ensemble de pignons satellites (78) ne possèdent qu'une seule denture.

7. Boîte de vitesses pour véhicule selon l'une des revendications 1 à 6, caractérisée par un engrenage planétaire commandé en charge (40) comprenant

a) un support (38) de pignons satellites Hi-Lo, sur lequel les pignons satellites d'un ensemble de pignons satellites Hi-Lo (42) sont disposés de manière à pouvoir tourner et qui est relié avec blocage en rotation à un côté mené du second embrayage (C2),

b) une couronne dentée Hi-Lo (50), qui engrène avec les pignons satellites de l'ensemble de pignons satellites Hi-Lo (42) et est reliée avec blocage en rotation au premier pignon satellite (60) de l'engrenage planétaire principal (52),

c) une roue planétaire Hi-Lo (46), qui engrène avec les pignons satellites de l'ensemble de pignons satellites Hi-Lo (42),

d) des moyens de freinage Hi-Lo (BHI) pour freiner au choix le mouvement de rotation de la roue planétaire Hi-Lo (46) par rapport au carter (10) de la boîte de vitesses, et

e) des moyens d'embrayage Hi-Lo (CLO) pour l'embrayage au choix du mouvement de rotation de la roue planétaire Hi-Lo (46) avec le support (38) des pignons satellites.

8. Boîte de vitesses pour véhicule selon l'une des revendications 2 à 7, caractérisée par un engrenage satellite (40) commandé en charge comprenant

a) un support (38) de pignons satellites Hi-Lo, qui est monté avec blocage en rotation sur le second arbre intermédiaire (26) et est utilisé comme partie d'entrée,

b) une roue planétaire Hi-Lo (46), qui est montée de manière à pouvoir tourner sur le second arbre intermédiaire (26),

c) une couronne dentée Hi-Lo (50), qui est montée avec blocage en rotation sur le tambour intermédiaire (28) et est utilisée comme partie de sortie,

d) un ensemble de pignons satellites Hi-Lo (42), dont les pignons satellites sont montés de manière à pouvoir tourner sur la couronne dentée Hi-Lo (50) et engrènent avec la roue planétaire Hi-Lo (46) et avec la couronne dentée Hi-Lo (50),

e) des moyens de freinage Hi-Lo (BHI) pour freiner au choix le mouvement de rotation de la roue planétaire Hi-Lo (46) par rapport au carter (10) de la boîte de vitesses, et

f) des moyens d'embrayage Hi-Lo (CLO) pour l'embrayage au choix du mouvement de rotation de la roue planétaire Hi-Lo (46) avec le support (38) des pignons satellites Hi-Lo.

9. Boîte de vitesses pour véhicule selon la revendication 7 ou 8, caractérisée en ce que les pignons satellites de l'ensemble de pignons satellites Hi-Lo (42) sont des pignons satellites comportant des première et seconde dentures (44,48) et que la roue planétaire Hi-Lo (46) engrène avec la première denture (44), et la couronne dentée Hi-Lo (50) engrène avec la seconde denture (48).

10. Boîte de vitesses pour véhicule selon l'une des revendications 7 à 9, caractérisée en ce que des freins Hi-Lo (BHI) sont précontraints dans le sens desserré et l'embrayage Hi-Lo (CLO) est précontraint dans le sens de la position enclenchée.

Fig.1

Fig. 2a

EP 0 452 833 B1

Fig. 26

18

*Fig. 2c*

*Fig. 2∂*

Fig. 3